## Europäisches Patentamt

(19) **European Patent Office**

**Office européen des brevets**

(11) Veröffentlichungsnummer: **0 111 848**

**B1**

(12) # EUROPÄISCHE PATENTSCHRIFT.

(45) Veröffentlichungstag der Patentschrift:
**15.10.86**

(51) Int. Cl.⁴: **B 65 G 1/04,** B 66 F 9/07

(21) Anmeldenummer: **83112401.1**

(22) Anmeldetag: **09.12.83**

(54) **Verfahren und Vorrichtung zum Fördern von in Regalen auf Paletten gelagertem plattenförmigem Gut, insbesondere Blechtafeln.**

(30) Priorität: **21.12.82 DE 3247179**

(43) Veröffentlichungstag der Anmeldung:
**27.06.84 Patentblatt 84/26**

(45) Bekanntmachung des Hinweises auf die Patenterteilung:
**15.10.86 Patentblatt 86/42**

(84) Benannte Vertragsstaaten:
**AT BE FR GB IT NL**

(56) Entgegenhaltungen:
**DE-A-2 009 520**
**DE-A-2 241 968**
**DE-A-3 111 943**
**DE-B-1 208 250**
**DE-B-1 292 581**
**DE-U-7 718 050**

(73) Patentinhaber: **Hans Lingl Anlagenbau und Verfahrenstechnik GmbH & Co. KG, Albrecht- Berblinger- Strasse 6, D-7910 Neu- Ulm (DE)**

(72) Erfinder: **März, Georg, Kemnatstrasse 59, D-8877 Burtenbach (DE)**

(74) Vertreter: **Körber, Wolfhart, Dr., Patentanwälte Dipl.- Ing. H. Mitscherlich Dipl.- Ing. K. Gunschmann Dr.rer.nat. W. Körber Dipl.Ing. J. Schmidt- Evers Dipl.- Ing. W. Melzer Steinsdorfstrasse 10, D-8000 München 22 (DE)**

EP 0 111 848 B1

LIBER, STOCKHOLM 1986

## Beschreibung

Die Erfindung betrifft ein Verfahren der im Oberbegriff des Anspruchs 1 aufgefürten Art sowie eine Vorrichtung zur Durchführung des Verfahrens nach Anspruch 1 mit den im Gattungsbegriff des Anspruches 2 aufgeführten Merkmalen.

Verfahren und Vorrichtung, die dem entsprechen, sind durch die DE-OS 22 41 968 bekannt.

Mit dem bekannten Verfahren werden jeweils nur Teilmengen gesammelt, über dessen Transport zur Bereitstellstation nähere Angaben fehlen.

Die als Auflage dienende Ablage- und Sammeleinrichtung befindet sich in gleicher Höhe mit der das Gut den Regalfächern entnehmenden Paletten-Fördereinrichtung und ist neben dieser auf einer gemeinsamen Plattform des Hubschlittens gelagert. Diese Plattform hat eine über mehr als zwei Fächer sich erstreckende Ausdehnung, was platzaufwendig ist. Außerdem führt die die Teilmengen von der Paletten-Fördereinrichtung ebhebende Hubeinrichtung zum Ablegen derselben auf die Ablage- und Sammeleinrichtung lotrechte und horizontale Bewegungen in Form erines umgekehrten U aus.

Durch die DE-AS 1 292 581 ist ein Regalbedienungsgerät mit einem Hubschlitten bekannt, der über eine Kurzhubvorrichtung heb- und senkbare Katzfahrbahnen mit nach der vom Regal abgewandten Seite auskragenden Armen für eine Laufkatze aufweist. An dieser sind über eine weitere Kurzhubvorrichtung höhenverstellbar Haftorgane angebracht. Zum Entnehmen von Gut aus einem Regalfach wird die Laufkatze grobreguliert über dieses angehoben und so weit in das Fach eingefahren, daß die Haftorgane über die ihnen zugeordnete Kurzhubvorrichtung feinreguliert auf das Gut abgesenkt werden können. Nach Abheben des Gutes wird die Laufkatze über die auskragenden Arme nach außen gefahren, worauf die Haftorgane das Gut auf einen Rollgang im Hubschlitten absetzen.

Es sind also zwei aufeinander abzustimmende Hubvorrichtungen innerhalb des Hubschlittens zum Entnehmen des Gutes notwendig. Dazu kommt, daß wegen der einseitig auskragenden Arme für die Laufkatze das Bedienungsgerät in Laufgängen zwischen zwei Regalen, nicht einsetzbar ist.

Der Erfindung liegt die Aufgabe zugrunde, gegenüber einem Verfahren und einer Vorrichtung entsprechend der DE-A- 22 41 968 das Gut rascher sowie raumsparend zusammenzustellen und bis zur Bereitstellstation weiter zuzufördern.

Diese Aufgabe wird mit den im kennzeichnenden Teil des Anspruchs 1 wiedergegebenen Verfahrensmaßnahmen bzw. mit dem im Anspruch 2 gekennzeichnenden Merkmalen der Vorrichtung gelöst.

Durch das erfindungsgemäße wahlweise Zusammenstellen von Teilmengen mit Palettenchargen wird das Sammeln und Weiterfördern des Gutes vereinfacht. Durch die erfindungsgemäße Ausbildung des Regalbedienungsgerätes werden die Grundfläche desselben verkleinert und die Förderwege verkürzt.

Ein Ausführungsbeispiel der Erfindung ist in der Zeichnung dargestellt und wird im folgenden näher beschrieben. Es zeigen:

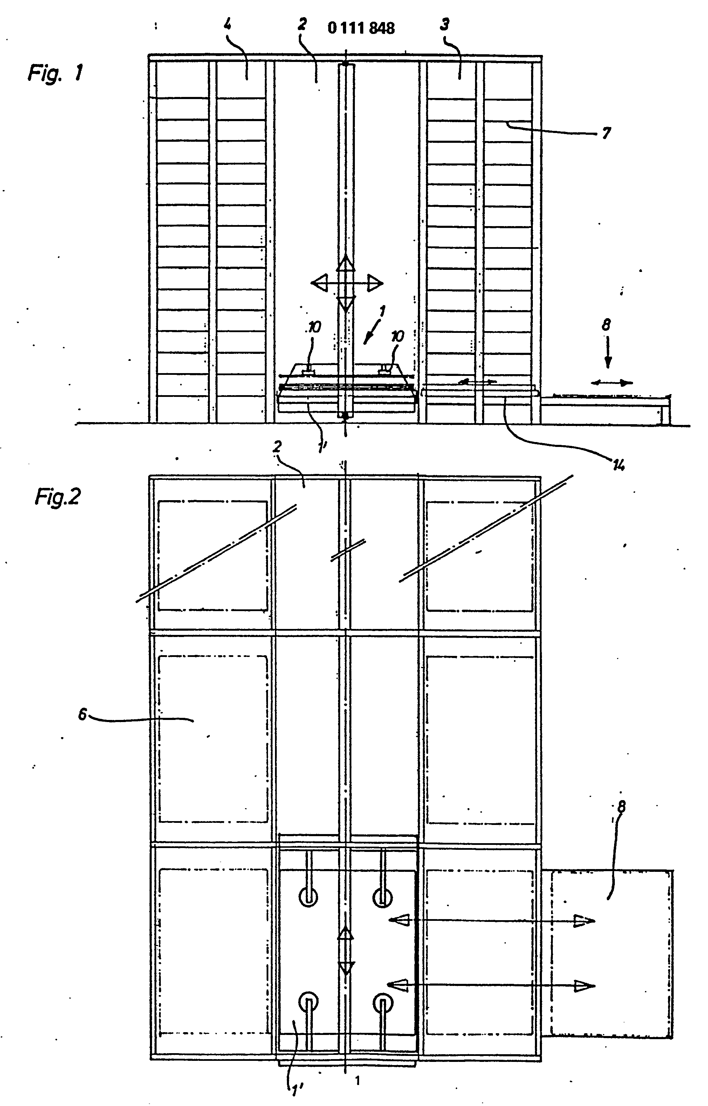

Figur 1 eine Seitenansicht des Hochregallagers;

Figur 2 eine Draufsicht;

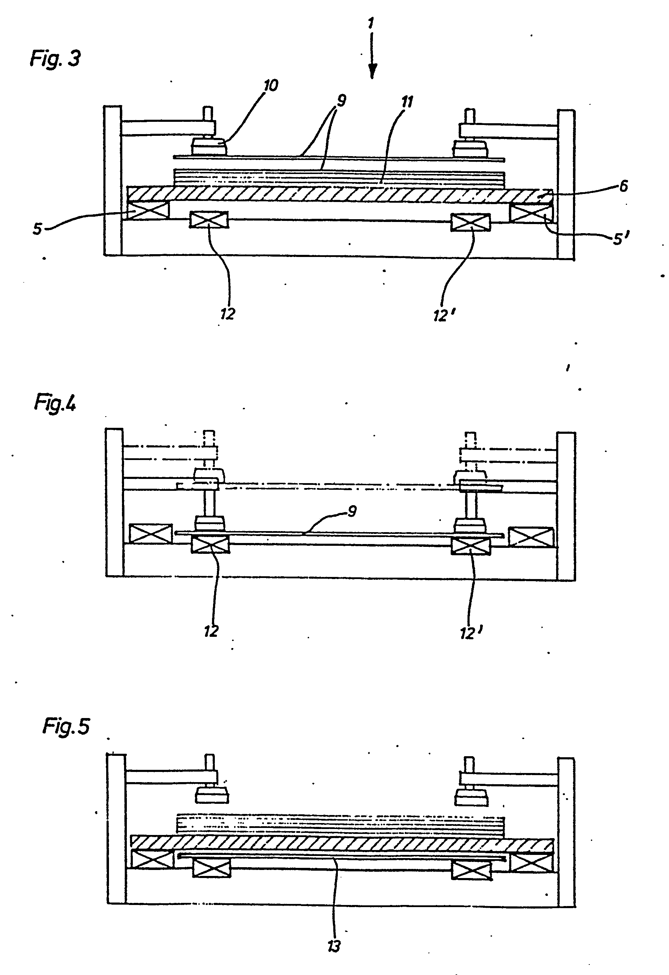

Figur 3 einen schematischen Schnitt durch das Regallager-Bedienungsgerät nach Abheben einer Blechtafel von einer Palettencharge;

Figur 4 das Regallager-Bedienungsgerät, nachdem die Palette wieder eingeschoben und die Blechtafel auf ein weiteres Fördermittel abgesetzt ist;

Figur 5 das Regallager-Bedienungsgerät mit einer Charge von Blechtafeln zusätzlich zu einer Palette mit kommissionierten Blechtafeln.

Ein Regalbedienungsgerät 1 ist in einem Gang 2 zwischen Hochregalen 3, 4 hin- und herfahrbar und mit einem Hubschlitten 1' ausgestattet. Auf dem Hubschlitten ist eine Fördereinrichtung 5, 5' zum Umsetzen von Paletten 6 zwischen einem Regalfach 7 und dem Bedienungsgerät 1. Die Paletten-Fördereinrichtung besteht aus zwei zueinander parallelen Fördergeräten, die beispielsweise teleskopierbar sind. Oberhalb der Fördergeräte 5, 5' ist eine aus einer Anzahl von Vakuum- oder Magnethebern 10 bestehende Hubeinrichtung höhenverstellbar am Hubschlitten gelagert. Unter den Paletten-Fördergeräten 5, 5' ist eine Ablage- und Sammeleinrichtung 12, 12' für aus den Fächern entnommene Blechtafeln vorgesehen, deren Abstand von der Paletten-Fördereinrichtung 5, 5' je nach Anzahl der darauf abzulegenden Blechtafeln variierbar ist. Zwischen den Fördergeräten 5, 5' ist ein Zwischenraum freigelassen, der den Durchtritt der an den Hebern 10 haftenden Blechtafeln gestattet. Die Ablage- und Sammeleinrichtung besteht aus zwei Fördergeräten 12, 12', die in gleicher Richtung wie die Fördergeräte 5, 5' verlaufen und im Bereich des Zwischenraumes der Fördergeräte 5, 5' liegen.

Neben den Hochregalen 3, 4 befindet sich mindestens eine Bereitstellstation 8 zur Beschickung mit oder zur Entnahme von kommissionierten Blechtafeln 9.

Mit dem Regalbedienungsgerät 1 wird zunächst ein bestimmtes Fach 7 angefahren, dann wird eine Palette 6 mittels der Fördergeräte 5, 5' aus dem Fach 7 herausgezogen. Anschließend heben die Heber 10 die oberste Blechtafel von dem auf der Palette 6 gelagerten Stapel 11 ab. Nach dem Wiederfahren der Palette 6 in das Fach 7 senken die Heber 10 die Blechtafel auf die Förderorgane 12, 12' ab.

Anschließend werden nacheinander die nächsten vorgewählten Fächer 7 angefahren, wobei der vorbeschriebene Ablauf der Entnahme einer Blechtafel sich wiederholt, solange bis auf den Fördergeräten 12, 12' ein der Kommission entsprechender Blechstapel 12 gebildet ist.

An die Fördergeräte 5, 5' und 12, 12' schließen in der Abförderrichtung fluchtend Umsetzförderer 14 an, die die kommissionierten Blechtafeln 6 und/oder Palettenchargen zur Bereitstellstation 8 bringen. Die Umsetzförderer 14 können bei bodenfrei aufgeständerten Regalen unter diesen angeordnet sein.

Bei Einlagerung der Blechtafeln in die Hochregale erfolgt der vorbeschriebene Funktionsablauf in umgekehrter Reihenfolge.

**Patentansprüche**

1. Verfahren zum Fördern von in Regalen (3, 4) auf Paletten (6) gelagertem plattenförmigen Gut, wie Blechtafeln, mittels eines Regalbedienungsgerätes (1) in eine Bereitstellstation (8), wobei das Regalbedienungsgerät an ein oder nacheinander an mehrere vorgewählte Fächer herangefahren wird, dort jeweils die Palette aus ihrem Fach herausgezogen, daraufhin eine Teilmenge des Gutes von der Palette abgehoben und nach Zurückschieben der Palette in ihr Fach auf eine Auflage des Bedienungsgerätes abgesenkt wird, auf der dem bzw. den ausgewählten Fächern entnommenes Gut angesammelt und anschließend zur Bereitstellstation weitergefördert wird, dadurch gekennzeichnet, daß die abgehobene Teilmenge in der Bewegungsbahn der Palette auf die Auflage abgesenkt und nach dem Sammeln der Teilmengen auf der Auflage eine Palettencharge bis über die Auflage bewegt wird zur gemeinsamen Weiterförderung zur Bereitstellstation.

2. Vorrichtung zur Durchführung des Verfahrens nach Anspruch 1, mit einem in Regalgängen (2) hin- und herfahrbaren Regalbedienungsgerät (1) dessen Hubschlitten (1') mit einer Fördereinrichtung (5, 5') zum Umsetzen der Paletten (6) zwischen Regalfächern und Bedienungsgerät, ferner mit einer Ablage- und Sammeleinrichtung (12, 12') für von den Regalfächern entnommenen Gut, sowie mit einer oberhalb der Paletten-Fördereinrichtung angebrachten Hubeinrichtung mit Hafthebern zum Abheben der Teilmengen und Absenken auf die Ablage- und Sammeleinrichtung ausgerüstet ist, dadurch gekennzeichnet, daß die Ablage und Sammeleinrichtung (12, 12') in einstellbarem Abstand direkt unterhalb der Paletten-Fördereinrichtung (5, 5') angeordnet ist, die Paletten-Fördereinrichtung (5, 5') aus parallelen Fördergeräten (5 bzw. 5') mit entsprechendem Zwischenraum besteht, durch welchen die Hubeinrichtung (10) hindurch nach unten bewegt wird, daß ferner die Ablage- und Sammeleinrichtung aus zwischen den Paletten-Fördergeräten (5, 5') sich erstreckenden Fördergeräten (12, 12') besteht, und daß eine Umsetzeinrichtung (14) zwischen Regalbedienungsgerät (1) und Bereitstellstation (8) vorgesehen ist.

3. Vorrichtung nach Anspruch 2, dadurch gekennzeichnet, daß an die Fördergeräte (5, 5') bzw. (12, 12') des Hubschlittens (1) in der Abgabeposition fluchtend Förderer (14) zum Umsetzen des entnommenen Gutes auf die Bereitstellstation anschließen.

4. Vorrichtung nach Anspruch 3, dadurch gekennzeichnet, daß die Umsetzförderer (14) unter bodenfrei aufgeständerten Regalen quer zum Regalgang (2) verlaufen.

**Claims**

1. A method of transferring sheet material, such as sheet metal panels, stored on pallets (6) in racks (3, 4) to a marshalling station (8) by means of a rack serving unit (1), the said rack serving unit being moved to one or successively a plurality of preselected compartments where each pallet is pulled out of its compartment whereupon part of the pallet load is lifted from the pallet and, after the pallet has been pushed back into its compartment, is lowered onto a support of the rack serving unit on which material retrieved from the selected compartment or compartments is accumulated and then moved on to the marshalling station, characterized in that the lifted part load is lowered onto the support in the path of pallet movement and that after accumulation of the part loads on the support a complete pallet load is moved to a level above the support for onward conveyance to the marshalling station.

2. A device for reducing to practice the method claimed in Claim 1, comprising a rack serving unit (1) which can be moved to and fro in rack aisles (2) and which has an elevating slide (1') equipped with conveying means (5, 5') for transferring the pallets (6) between rack compartments and rack serving unit and with depositing and accumulating means (12, 12') for material retrieved from the rack compartments as well as with lifting means disposed above the pallet conveying means with retentive lifters for lifting part loads and lowering them onto the depositing and accumulating means, characterized in that the said depositing and accumulating means (12, 12') are disposed at an adjustable distance directly below the said pallet conveying means (5, 5'), that the said pallet conveying means (5, 5') consist of parallel conveyors (5 or 5') disposed in spaced relationship to each other through which the said lifting means (10) are moved down, that the said depositing and accumulating means consist of conveying means (12, 12') extending between the said conveying means (5, 5') and that transferring means (14) are provided between the said rack serving unit (1) and marshalling station (8).

3. A device as claimed in Claim 2, characterized in that the said conveying means (5, 5') and (12, 12') of the elevating slide (1') in their transfer position connect up to aligned conveyors (12) for transferring the retrieved material to the marshalling station.

4. A device as claimed in Claim 3, characterized in that the said transferring conveyors (14) extend below racks with columns providing the necessary ground clearance transversely to the aisle (2).

**Revendications**

1. Procédé de transport de produits en plaques, stockés dans des rayonnages (3, 4), sur des palettes (6), tels que plaques de tôles, à l'aide d'un approvisionneur de rayonnages (1) dans un poste d'approvisionnement (8), auquel cas l'approvisionneur de rayonnages est acheminé à un ou, successivement, à plusieurs cases présélectionnées, les palettes étant respectivement extraites de leurs cases, puis une partie des produits est enlevée de la palette et après le retour des palettes dans leurs cases, celle-ci est descendue sur un support de l'approvisionneur, sur lequel les produits, prélevés sur le ou les cases sélectionnées, sont groupés, puis acheminés au poste d'approvisionnement, caractérisé par le fait que la quantité partielle enlevée, dans la trajectoire de mouvement de la palette, est descendue sur le support et que, après le groupement des quantités partielles sur le support, un lot de palettes est déplacé jusqu'au-dessus du support, pour un réacheminement conjoint au poste de préparation.

2. Dispositif destiné à l'exécution du procédé d'après la revendication n° 1, à l'aide d'un approvisionneur de rayonnages (1) déplaçable par un mouvement de va-et-vient dans des passages de rayonnages (2), approvisionneur dont le chariot de levage (1') est équipé d'un convoyeur (5, 5') pour le transfert des palettes (6) entre les cases de rayonnages et l'approvisionneur, en outre d'un dispositif de dépose et de groupement (12, 12') pour les produits enlevés des cases de rayonnages, ainsi que d'un dispositif de levage avec releveurs par adhérence, monté au-dessus du convoyeur de palettes, pour le levage et la descente des quantités partielles sur le dispositif de dépose et de groupement, caractérisé par le fait que le dispositif de dépose et de groupement (12, 12') est disposé directement, à une distance réglable, au-dessous du convoyeur de palettes (5, 5'), que le convoyeur de palettes (5, 5') se compose d'appareils de manutention parallèles (5 ou 5') avec espace intermédiaire correspondant, à travers lequel le dispositif de levage (10) est déplacé vers le bas, qu'en outre le dispositif de dépose et de groupement se compose d'appareils de manutention (12, 12') s'étendant entre les appareils de manutention pour palettes (5, 5') et qu'un dispositif de transfert (14) est prévu entre l'approvisionneur (1) et le poste d'approvisionnement (8).

3. Dispositif d'après la revendication n° 2, caractérisé par le fait que les appareils de manutention (5, 5,) du chariot de levage (1) s'alignent, dans la position de dépose, sur le convoyeur (14) pour le transfert, au poste d'approvisionnement, des produits enlevés.

4. Dispositif d'après la revendication n° 3, caractérisé par le fait que les convoyeurs de transfert (14) sont prévus, perpendiculairement au passage des rayonnages (2), sous des rayonnages montés avec une hauteur libre par rapport au sol.

*Fig. 1*

0 111 848

*Fig.2*

Fig. 3

Fig.4

Fig.5